# EUROPEAN PATENT SPECIFICATION

(11) **EP 1 212 909 B1**
(45) Date of publication and mention of the grant of the patent: **16.07.2008**
(21) Application number: 00959079.5
(22) Date of filing: 29.08.2000
(51) Int. Cl.: H04Q 7/36

(54) **CELL BREATHING REDUCTION IN A CELLULAR NETWORK**
REDUKTION DER ZELLATMUNG IN EINEM ZELLULAREN KOMMUNIKATIONSSYSTEM
REDUCTION DES VARIATIONS DES TAILLES DE CELLULES ("CELL BREATHING") DANS UN RESEAU CELLULAIRE

(30) Priority: 30.08.1999 US 385375
(43) Date of publication of application: 12.06.2002
(73) Proprietor: TELEFONAKTIEBOLAGET LM ERICSSON (publ), 164 83 Stockholm (SE)
(72) Inventor: BERGENLID, Lars, S-191 63 Sollentuna (SE)
(74) Representative: Kühn, Friedrich Heinrich
(86) International application number: PCT/SE2000/001654
(87) International publication number: WO 2001/017300

(56) References cited:
- WO-A-96/37082
- WO-A-98/16029
- WO-A-98/52364

## Description

### BACKGROUND

### 1. FIELD OF THE INVENTION

The present invention pertains to cellular telecommunications, and particularly to maintaining sufficient cell size in a cellular telecommunications system.

### 2. RELATED ART AND OTHER CONSIDERATIONS

Cellular telecommunications systems employ a wireless link (e.g., air interface) between the (mobile) user equipment and a base station (BS). The base station has transmitters and receivers for radio connections with numerous mobile user equipment units. The mobile user equipment units can take the form of cellular telephones or laptop computers with mobile termination, for example. The effective geographical transmission/reception range of a base station defines a cell served by that base station. Thus, in a sense, the cell is the territory in which a user equipment unit can be located and still remain in radio communication over the air interface with the associated base station.

In a cellular telecommunications network, the base stations are preferably situated so that the cells served thereby are slightly overlapping proximate their perimeters or at least contiguous, thereby permitting a user equipment unit to move from one cell to another cell and remain within the telecommunications network. For example, when a user equipment unit participating in a mobile connection (e.g., telephone call) moves from a first cell served by a first base station to a second cell served by a second base station, in some technologies a handoff or handover of the mobile connection occurs. As a result of the handoff or handover, the mobile connection is handled through the second base station rather than the first station as formerly.

Radio coverage is a very important characteristic for all cellular telecommunication systems. Cell size is a major factor in obtaining good geographical coverage. The cell size is dependent upon the maximum allowed path loss between the user equipment unit and the base station. The greater the maximum allowed path loss, the further a user equipment unit can move away from the base station and still receive a sufficient signal. This means that if the maximum allowed path loss is increased, then the cell size is increased. Conversely, if the maximum allowed path loss is decreased, then the cell size is reduced.

There are a variety of multiple access techniques for cellular telecommunications systems which permit cellular telecommunications resources to be available to large numbers of users. One multiple access technique which has gained recent interest is code division multiple access (CDMA). In a code division multiple access (CDMA) mobile telecommunications system, the information transmitted between a base station and a particular mobile station is modulated by a mathematical code (such as spreading code) to distinguish it from information for other mobile stations which are utilizing the same radio frequency. Thus, in CDMA, the individual radio links are discriminated on the basis of codes. Various aspects of CDMA are set forth in Garg, Vijay K. et al., Applications of CDMA in Wireless/Personal Communications, Prentice Hall (1997). Typically the same base band signal with suitable spreading is sent from several base stations with overlapping coverage. The mobile terminal can thus receive and use signals from several base stations simultaneously.

In general, a CDMA base station attempts to maintain a sufficient Signal to Interference Ratio (SIR) in communications with each mobile station that it currently serves. To this end, a base station measures the received signal from each of the mobile stations in order to determine the Signal to Interference Ratio (SIR). For each mobile station, the SIR is compared with a target value SIR. If the SIR measured for a particular mobile station is less than the target value SIR, the base station commands the mobile station to increase its power in order that a stronger signal can be received at the base station. On the other hand, if the SIR determined for the particular station is greater than the target value SIR, the base station requests the mobile station to decrease its power. Thus, a power control loop is established between the base station and the mobile station, with an uplink aspect of the power control loop involving the mobile station transmitting to the base station and with the base station, upon receiving the signal from the mobile station and comprising the SINR for the station with the target SIR, providing power control commands to the mobile station as a downlink aspect of the power control loop. An example CDMA power loop control system is disclosed in United States Patent No. 6,154,450 entitled "Signaling Method for CDMA Quality Based Power Control".

Thus, in a CDMA system, when the number of active user equipment units increase in a cell, then the interference level also increases in the cell. Unfortunately, this increased interference level has a negative impact upon the maximum allowed path loss. That is, the increased interference level will also decrease cell size. The reduction of cell size due to an increased interference level produces an effect in a CDMA system commonly referred to as "cell breathing".

The overall effect of cell breathing is that the cell size is reduced when the traffic is increased. Providing more cells (e.g., a more dense population of base stations) is one way of compensating for this undesirable reduction of cell size. However, there is expense and overhead in providing and operating additional base stations. Moreover, the provision of more cells may still result in varying cell coverage, e.g., cell breathing with respect even to the new cells.

WO 98/52364 discloses a system and method for operating a cellular communication system wherein frequency reuse of available carrier frequencies is maximized, thereby maximizing system traffic capacity. The system includes an outer cell grid generated by a plurality of base station receivers connected to a common network controller. Within the grid of outer cells is at least one overlapping sub-grid of inner cells that may be generated by the same base stations as the outer cells, or which may be generated using separate base station transceivers located within the outer cell. At least two frequency reuse patterns are applied to the cells, one pattern for the outer cells and another, tighter pattern for the inner cells.

What is needed, therefore, and an object of the present invention, is a technique to reduce the effect of cell breathing in a telecommunications system.

### BRIEF SUMMMARY OF THE INVENTION

Traffic is allocated between plural radio frequencies utilized at a base station of a cellular telecommunications system according to a cell size strategy for a cell served by the base station. The traffic can be allocated between the plural frequencies utilized at the base station to maintain a cell size as having a predetermined coverage (e.g., to maximize cell size or maintain the cell size has having a predetermined geographical minimum), thereby reducing effects of cell breathing.

In accordance with aspects of the invention, the base station is operated so that at least one of its plural frequencies can be utilized as far away as a geographically constant cell perimeter. In this regard, one of the plural frequencies utilized at the base station is selected as a maximum coverage frequency. The interference on the maximum coverage frequency is limited so that at least the maximum coverage frequency can be utilized throughout the cell, even to the constant cell perimeter.

In one mode of the invention, known as the interference controlled mode, the total interference on the maximum coverage frequency is limited so that the maximum coverage frequency can be utilized at the furthermost extent of the cell. In this mode, total interference on the maximum coverage frequency is measured and, if the total interference exceeds a predetermined threshold, (1) one or more connections carried by the maximum coverage frequency is released (handed over) to another one of the plural frequencies, and/or (2) newly requesting connections are required to be carried on the other frequency(ies). In one example embodiment of this mode, the total interference measurement for the maximum coverage frequency is made at the base station. The base station transfers its total interference measurement for the maximum coverage frequency to its radio network controller (RNC). The radio network controller (RNC) compares the total interference for the maximum coverage frequency to a constant coverage threshold value for the base station. If the total interference for the maximum coverage frequency is within a first predetermined interval of the constant coverage threshold value, the radio network controller (RNC) realizes that the maximum coverage frequency requires protection. For such protection, a resource allocation unit in the radio network controller (RNC) can either (1) transfer existing connections from the maximum coverage frequency to the other frequency(ies), or (2) require that new connections utilize the frequency(ies) other than the maximum coverage frequency. Should the total interference for the maximum coverage frequency fall below a second predetermined interval of the constant coverage threshold value, the radio network controller (RNC) can suspend protection efforts for the maximum coverage frequency.

In another mode, known as the connection controlled mode, the available frequencies are ordered in a list. The plural frequencies on the ordered list are ranked in a preferred order of usage with the maximum coverage frequency being the one that is used last (i.e., a least preferred frequency). In the connection controlled mode, when there is a new connection, the system tires to allocate according to the ordered list with the maximum coverage frequency being utilized only as a last resort. For the connection controlled mode, there is also the possibility also to limit the number of connections.

In yet another mode, known as the traffic controlled mode, the amount of traffic occurring on each frequency is monitored and used as an estimate of the load or interference on each frequency. High traffic connections can be allocated to frequencies other than the maximum coverage frequency.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1 a schematic view of an embodiment of a telecommunications system which utilizes the present invention.
Fig. 2A is a diagrammatic view of a cell.
Fig. 2B is a diagrammatic view of a conventionally operated cell in a heavy traffic situation.
Fig. 2C is a diagrammatic view of the cell of Fig. 2B operated in accordance with a mode of the present invention rather than conventionally.
Fig. 3 is a schematic view of selected components of a base station node and a radio network controller (RNC) node, included in the telecommunications system of Fig. 1, according to an embodiment of the present invention.
Fig. 4 is a flowchart showing example basic steps performed in accordance with an interference controlled mode of the present invention.
Fig. 5 is a diagrammatic view of an example format of a coverage assurance message according to an embodiment of the invention.
Fig. 6 is a diagrammatic view of a resource allocation table used for a connection controlled mode of the invention.
Fig. 7 is a flowchart showing example basic steps performed in accordance with a connection controlled mode of the present invention.
Fig. 8 is a flowchart showing example basic steps performed in accordance with a traffic controlled mode of the present invention.

### DETAILED DESCRIPTION OF THE DRAWINGS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

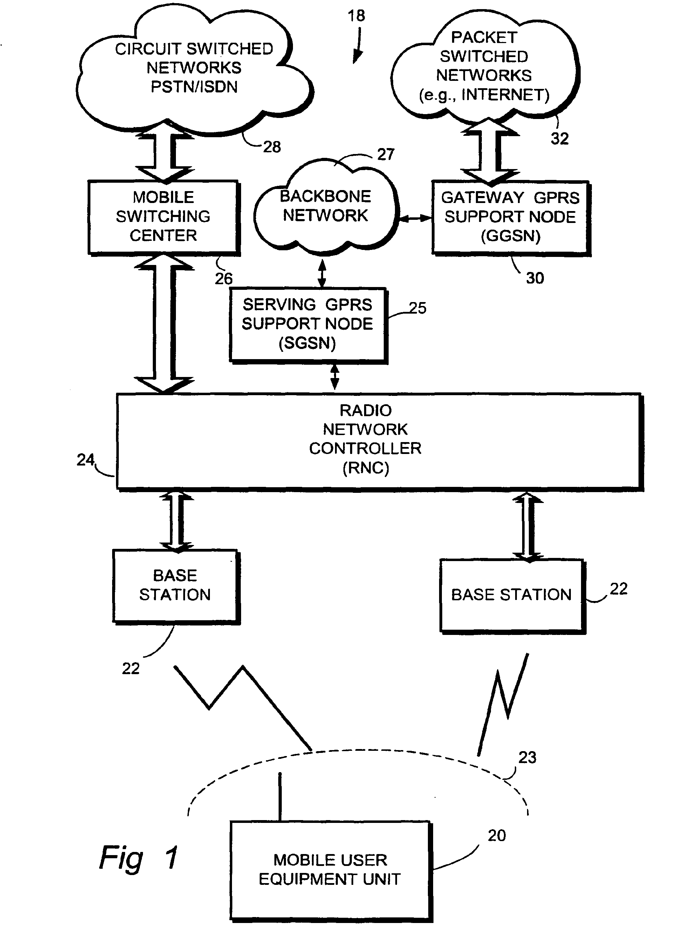

Fig. 1 shows a telecommunications network 18 in which a user equipment unit 20 communicates with one or more base stations 22 over air interface (e.g., radio interface) 23. Base stations 22 are connected by terrestrial lines (or microwave) to radio network controller (RNC) 24 [also known as a base station controller (BSC) in some networks]. The radio network controller (RNC) 24 is, in turn, connected through a control node known as the mobile switching center 26 to circuit-switched telephone networks (PSTN/ISDN) represented by cloud 28. In addition, radio network controller (RNC) 24 is connected to Serving GPRS Support Node (SGSN) 25 and through backbone network 27 to a Gateway GRPS support node (GGSN) 30, through which connection is made with packet-switched networks (e.g., the Internet, X.25 external networks) represented by cloud 32.

As understood by those skilled in the art, when user equipment unit 20 participates in a mobile telephonic connection, signaling information and user information from user equipment unit 20 are transmitted over air interface 23 on designated radio channels to one or more of the base stations 22. The base stations have radio transceivers which transmit and receive radio signals involved in the connection or session. For information on the uplink from the user equipment unit 20 toward the other party involved in the connection, the base stations convert the radio-acquired information to digital signals which are forwarded to radio network controller (RNC) 24. The radio network controller (RNC) 24 orchestrates participation of the plural base stations 22 which may be involved in the connection or session, since user equipment unit 20 may be geographically moving and handover may be occurring relative to the base stations 22. On the uplink, radio network controller (RNC) 24 picks frames of user information from one or more base stations 22 to yield a connection between user equipment unit 20 and the other party, whether that party be in PSTN/IDSN 28 or on the packet-switched networks (e.g., the Internet) 32.

In the illustrated embodiment, since plural mobile stations served by base station 22 can utilize the same radio frequencies, code division multiple access techniques are employed to distinguish between the various mobile stations. In fact, unless otherwise noted, as used herein the term "channel" refers to CDMA channel, which for any mobile station is defined in terms of an RF frequency and a particular code sequence.

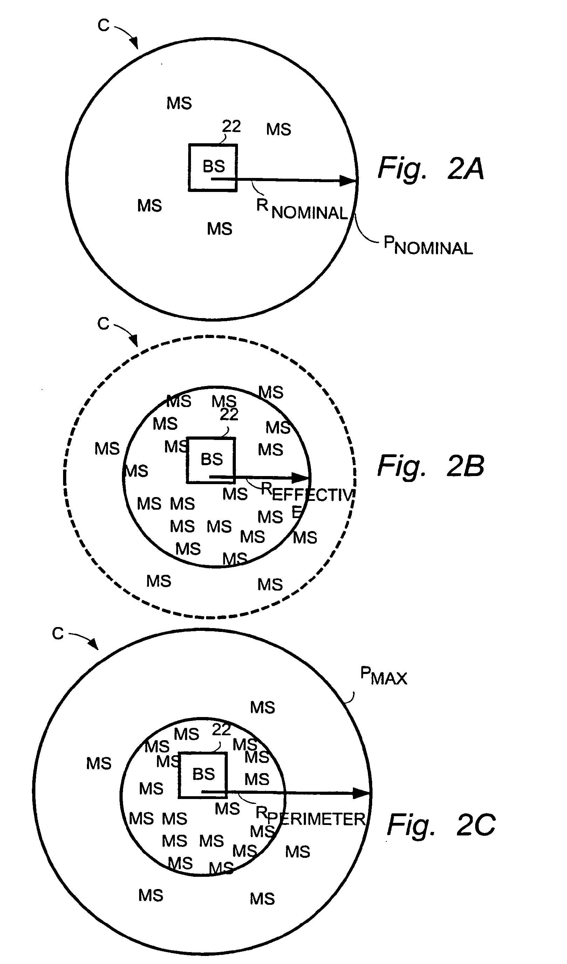

Fig. 2A shows a cell C served by a representative one of the base stations (which is identified simply as base station 22). The base station 22 and cell C are designed so that, under reasonable traffic conditions, a frequency utilized by base station 22 (either downlink or uplink frequency) is effective for connections with user equipment units located at a nominal radius R_{NOMINAL} from base station 22. As shown in Fig. 2A, cell C has a nominal perimeter P_{NOMINAL}. The "MS"s in Fig. 2A represent locations of active user equipment units (e.g., mobile stations) in cell C.

Fig. 2B illustrates a heavy traffic situation for cell C as conventionally operated. In accordance with conventional operation, there may be only one frequency utilized for each directional link with respect to base station 22 (e.g., only one frequency for the uplink and only one frequency for the downlink), or (if multiple frequencies are provided) no coordination between the multiple frequencies for sake of cell coverage. Fig. 2B shows cell C having many more user equipment units MSs being shown than in Fig. 2A. In view of the interference occasioned by the increased traffic in cell C as shown in Fig. 2C, the frequency utilized by base station 22 is effective only to a distance R_{EFFECTIVE} shown in Fig. 2B (R_{EFFECTIVE} < R_{NOMINAL}). In essence, the conventional operation and cell breathing of cell C has reduced the coverage area of cell C, e.g., reduced the coverage area of base station 22. Consequentially, user equipment units MS positioned at a radius from base station 22 greater than R_{EFFECTIVE} shown in Fig. 2B cannot be served by base station 22 under these heavy traffic conditions.

The present invention reduces effects of cell breathing in a manner illustrated, for example, in Fig. 2C. In particular, in accordance with the present invention plural radio frequencies are utilized by base station 22 for each directional link (e.g., plural frequencies for the uplink and plural frequencies for the downlink). As explained below, one of the plural frequencies is designated as a maximum coverage frequency. In essence, interference on the maximum coverage frequency is limited by allocation of traffic, when necessary, to another of the radio frequencies. The limiting of traffic (e.g., by reallocation to other frequency(ies)) keeps the maximum coverage frequency useable at the cell perimeter (assuming sufficient available channels). Thus, as shown in Fig. 2C, the cell C as operated by the present invention has a maximum geographical cell perimeter P_{MAX} (P_{MAX} being greater than P_{EFFECTIVE}). In order to reserve the maximum coverage frequency for use at perimeter P_{MAX}, traffic may be allocated so that the maximum coverage frequency is allocated to user equipment units in the outer ring region as shown in Fig. 2C. Other frequency(ies) are allocated to the remaining user equipment units (as shown by the inner ring region, which now has a radius smaller than R_{EFFECTIVE} of Fig. 2B). Implementation of the frequency allocation scheme of the present invention is described in more detail below.

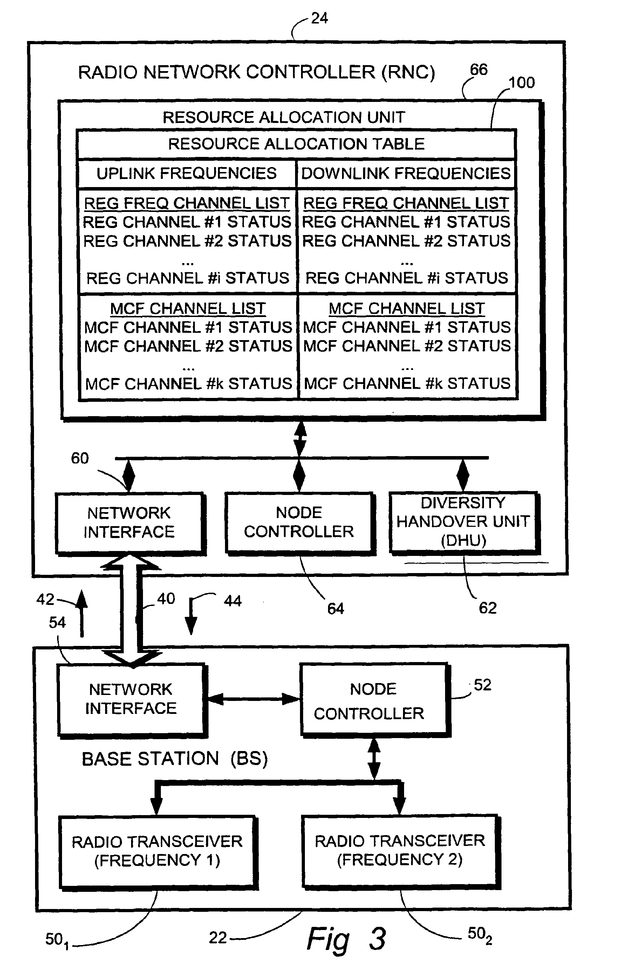

Fig. 3 shows in more detail components, pertinent to the present invention, of an example base station 22 node and an example radio network controller (RNC) 24 node. Base station 22 is connected by a physical link 40 to radio network controller (RNC) 24. Physical link 40 is typically a terrestrial or microwave line. In the illustrated embodiment, link 40 carries data and signaling packets between base station 22 and radio network controller (RNC) 24. Packets directed from base station 22 to radio network controller (RNC) 24 are said to form an uplink 42 between base station 22 and radio network controller (RNC) 24; packets directed from radio network controller (RNC) 24 to base station 22 are said to form an downlink 44 between base station 22 and radio network controller (RNC) 24.

As shown in Fig. 3, base station 22 includes radio transceiver 50₁ and radio transceiver 50₂; node controller 52; and, network interface 54. Base station 22 serves cell C. In accordance with CDMA techniques, a particular user equipment unit 20 in the cell is able to decode only the portion of the signal transmitted (from either transceiver 50₁ or transceiver 50₂) which has been encoded by the code known to that particular station. Similarly, the information transmitted by each user equipment unit 20 to base station 22 is encoded with a unique code particular to that user equipment unit and recognizable by base station 22 as being attributed to that station. The portion of a signal over which the code associated with a particular user equipment unit enables that user equipment unit to transmit or receive information relative to base station 22 is known as a "channel" for that station.

In base station 22, controller 52 conducts the coding and decoding of signals applied to and received from radio transceiver 50. The signals encoded by controller 52 are primarily those obtained over link 40 from radio network controller (RNC) 24. The signals decoded by controller 52 are primarily those destined for radio network controller (RNC) 24 over link 40. Network interface 54 is connected between controller 52 and link 40 in order to accommodate the transmission of signals between base station 22 and radio network controller (RNC) 24.

Radio network controller (RNC) 24 has its own network interface 60 connected to link 40. Network interface 60 is connected within radio network controller (RNC) 24 to diversity handoff (DHO) unit 62, node controller 64, and resource allocation unit (RAU) 66. Of considerable interest to the present invention are the functions performed by resource allocation unit (RAU) 66, which can include (for example) a microprocessor.

It should be noted, in passing, that the functions of radio network controller (RNC) 24 can also be performed by a type of node referred to as base station controller (BSC) or mobile switching center (MSC). Moreover, the radio network controller (RNC) 24 is typically connected to a plurality of base stations for performing operations such as those above-described. In addition, radio network controller (RNC) 24 is usually connected to one or more other radio network controllers comprising the mobile telecommunications network. At least one of the radio network controllers of the mobile telecommunications network is connected to or forms part of a gateway to the wired portion of the public switched telephone network (PSTN).

Diversity handoff (DHO) unit 62 performs numerous functions, including but not limited to assisting the transition which occurs when a mobile station travels or roams into a cell handled by another base station. In addition, diversity handoff (DHO) unit 62 computes a target signal to interference/noise ratio (TSNR) for each base station for which radio network controller (RNC) 24 is responsible.

The resource allocation unit (RAU) 66 of the embodiment of Fig. 3 includes a resource allocation table 100. The resource allocation table 100 has a list or table of potential radio frequency resources, and reflects the status (already allocated or available) for each resource. The resources on the resource allocation table 100 are grouped by uplink and downlink. In the particular example of resource allocation table 100 shown in Fig. 3, the resource allocation table 100 includes two frequencies for the uplink and a corresponding two frequencies for the downlink. In other words, for this particular case there is one regular frequency pair and one maximum coverage frequency (MCF) pair. For each frequency the resource allocation table 100 has plural records, and in particular a record for each channel of the frequency. Thus, there are i number of records in resource allocation table 100 corresponding to i number of channels for the uplink regular frequency; i number of records in resource allocation table 100 corresponding to i number of channels for the downlink regular frequency; k number of records in resource allocation table 100 corresponding to k number of channels for the uplink maximum coverage frequency; and k number of records in resource allocation table 100 corresponding to k number of channels for the downlink maximum coverage frequency. Each record includes a status indication from which resource allocation unit (RAU) 66 can determine if the channel has already been allocated to a connection or remains available for a new connection. In addition, for each channel which has already been allocated to a connection, the record includes a connection identifier.

For sake of simplification, the resource allocation table 100 of Fig. 3 is shown as having only two uplink frequencies and two downlink frequencies. It should be apparent that a greater number of uplink frequencies and two downlink frequencies can be employed.

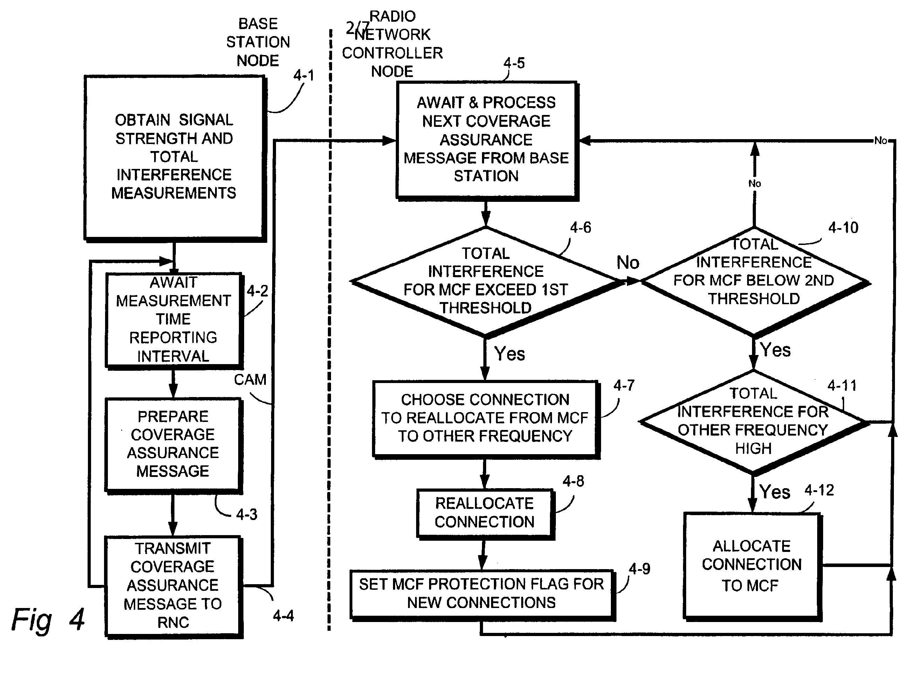

As will become more evident below, in the embodiment of Fig. 3 the total interference on the maximum coverage frequency (MCF) is limited so that the maximum coverage frequency is available for use by user equipment units proximate the maximum perimeter P_{MAX} of the cell (see Fig. 2C). Fig. 4 shows various basic steps or operations performed by base station 22 and radio network controller (RNC) 24 in connection with the Fig. 3 example embodiment of the invention.

At step 4-1, various signal measurements are performed by base station 22. In this regard, when a connection involving a user equipment unit is in progress, the strength (i.e., received power) of the signal on the uplink from the user equipment unit to base station 20 is monitored by base station 20. Preferably, the strength of the signal on the uplink from the user equipment unit to base station 20 is monitored essentially continuously by base station 20. In this regard, radio transceiver 50 is interrogated by controller 52 with respect to each channel (e.g., each user equipment unit) to ascertain the received power of the signal. For each uplink frequency, controller 52 thus knows the received power for all user equipment units served by the uplink frequency of base station 20. For each frequency, including the maximum coverage frequency (MCF), the total interference is also measured. The person skilled in the art will appreciate that there are a number of ways that total interference for a frequency can be measured or ascertained, such as, e.g., using the total received power as an estimate of total interferences. Thus, at step 4-1 the controller 52 determines, with respect to each uplink frequency, both a signal strength for each channel and a total interference for the uplink frequency.

In passing, it is also noted that, with respect to each user equipment unit, controller 52 also determines a signal to interference/noise ratio (SIR).

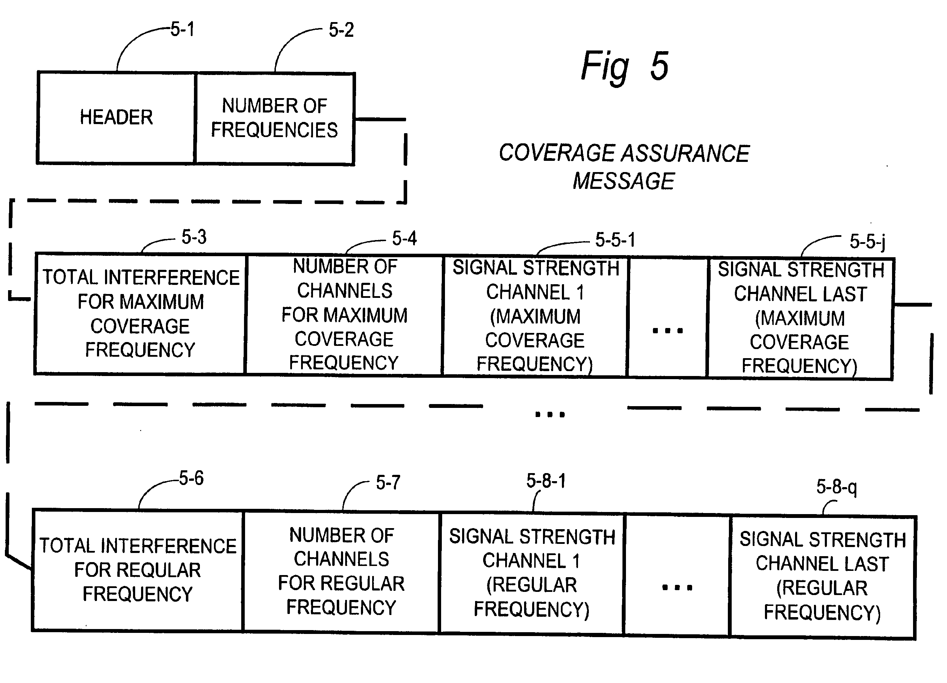

At step 4-2 controller 52 of base station 22 waits for a measurement time reporting interval. When it is time to report a measurement, at step 4-3 the controller 52 of base station 22 prepares a coverage assurance message (CAM). An example format of a coverage assurance message (CAM) is illustrated in Fig. 5. The coverage assurance message (CAM) begins with a header 5-1, which identifies, e.g., the type of message as being a coverage assurance message (CAM). The header is followed by a field 5-2 which declares the number of frequencies reported in the coverage assurance message (CAM). Field 5-3 declares the total interference for the uplink maximum coverage frequency. Field 5-4 states the number of channels active for the maximum coverage frequency. Fields 5-5-1 through 5-5-j give the signal strength for each of the active channels for the maximum coverage frequency. Similarly, field 5-6 declares the total interference for the uplink regular frequency (REGF). Field 5-7 states the number of channels active for the uplink regular frequency (REGF). Fields 5-8-1 through 5-8-q give the signal strength for each of the active channels for the uplink regular frequency (REGF). The values for total interference for each frequency, as well as the signal strength values for fields 5-5-1 through 5-5-j and fields 5-8-1 through 5-8-q, are obtained from step 4-1.

The format of the coverage assurance message (CAM) as illustrated in Fig. 5 would have a value of "2" in the number of frequencies field 5-2 in order to reflect utilization on the uplink of both the maximum coverage frequency and the other uplink frequency (herein known as the regular frequency). It will be readily understood that, when resource allocation table 100 has more than two uplink frequencies, the coverage assurance message (CAM) also includes information for a corresponding number of more than two uplink frequencies.

At step 4-4 the base station 22 is shown as transmitting the coverage assurance message (CAM) to radio network controller (RNC) 24 over link 40. Thereafter, the controller 52 of base station 22 returns to step 4-2 to determine if it is time to report new measurement results (which are being essentially continuously taken at step 4-1). Upon expiration of a further measurement time reporting interval, a further coverage assurance message (CAM) will be prepared and transmitted, all as understood with respect to the foregoing discussion of step 4-3 and step 4-4.

In Fig. 4, a broken line delineates steps performed by base station 22 (on the left of the broken line) and steps performed by radio network controller (RNC) 24 (on the right of the broken line). The transmission of the coverage assurance message (CAM) is reflected by the arrow labeled "CAM".

Step 4-5 of Fig. 4 shows radio network controller (RNC) 24 awaiting, and then processing (e.g., decoding), the coverage assurance message (CAM) received from base station 22. Remaining functions performed by radio network controller (RNC) 24, and particularly by resource allocation unit (RAU) 66, with respect to the coverage assurance message (CAM) are illustrated as steps 4-6 through 4-12 in Fig. 4.

At step 4-6 the resource allocation unit (RAU) 66 determines whether the total interference value for the maximum coverage frequency exceeds a predetermined interference first threshold. As understood from Fig. 5, the total interference value for the maximum coverage frequency is obtained from field 5-3 of the coverage assurance message (CAM). If the interference first threshold is exceeded, step 4-7 through step 4-9 are performed.

At step 4-7, the resource allocation unit (RAU) 66 chooses an existing connection to be reallocated from the maximum coverage frequency to the other frequency (the regular frequency). In performing step 4-7, the resource allocation unit (RAU) 66 can note, from the records in resource allocation table 100, the connection identifier of an allocated channel for the uplink maximum coverage frequency, and change the connection from the maximum coverage frequency to a channel of the regular frequency. Such reallocation is accomplished by resource allocation unit (RAU) 66 at step 4-8. In addition, anticipating that addition of further connections would also cause the total interference level for the maximum coverage frequency to exceed the interference threshold, at step 4-9 the resource allocation unit (RAU) 66 sets a MCF protection flag. As long as the MCF protection flag is set, all requests for new connections must be allocated a channel of the regular frequency. In other words, when the MCF protection flag is set, the maximum coverage frequency cannot be used for new connections.

If the interference first threshold is not exceeded at step 4-6, the resource allocation unit (RAU) 66 determines at step 4-10 whether the total interference value for the maximum coverage frequency is below a predetermined interference second threshold. If the total interference value for the maximum coverage frequency is below the predetermined interference second threshold, the resource allocation unit (RAU) 66 can determine whether further connections should be added to the maximum coverage frequency. In such case, resource allocation unit (RAU) 66 performs step 4-11 and step 4-12.

At step 4-11, resource allocation unit (RAU) 66 checks the total interference value for the other frequency (e.g., the regular frequency). In the Fig. 3 embodiment, this total interference value is obtained from field 5-6 of the coverage assurance message (CAM) of Fig. 5. If it is determined at step 4-11 that the total interference value for the other frequency (e.g., the regular frequency) is high, then at step 4-12 resource allocation unit (RAU) 66 allocates a connection from the regular frequency to the maximum coverage frequency. The allocation is performed by consulting the resource allocation table 100, and determining therefrom a connection which can be transferred from the regular frequency to the maximum coverage frequency.

In the event that the total interference value for the maximum coverage frequency is below the predetermined interference second threshold (see step 4-10), or should the total interference for the regular frequency not be high (see step 4-11), and upon completion of any of step 4-9 and step 4-12, the resource allocation unit (RAU) 66 returns to step 4-5 to await the next coverage assurance message (CAM) issued by base station 22.

Thus, the steps of Fig. 4 depict an interference controlled mode of operation of resource allocation unit (RAU) 66, wherein the total interference on the uplink maximum coverage frequency is limited to be below the interference first threshold (see step 4-6).

Insofar as the downlink is concerned, coverage is primarily determined by the available Multiple Carrier Power Amplifier (MCPA) output power. A MCPA can be viewed as a common amplifier that serves a number of mobile units and thus is a pooled resource. The MCPA facilitates allocating a higher power to a mobile further away and a lower power for a mobile closer to the base station so long as the total allocated power does not exceed the MCPA power. This has the overall effect that at all reasonable loads the coverage will be uplink limited. Accordingly, interference increase does not have the same effect as on the uplink.

Furthermore, most commonly each uplink frequency will have its corresponding downlink frequency, and one therefore often talks about a frequency allocation with the implicit meaning of one uplink frequency and the corresponding downlink frequency. Regarding the interference controlled mode, only the uplink interference has been included, so for that mode the most natural is to have a maximum coverage frequency based on the uplink measurements and together with this use the corresponding downlink frequency.

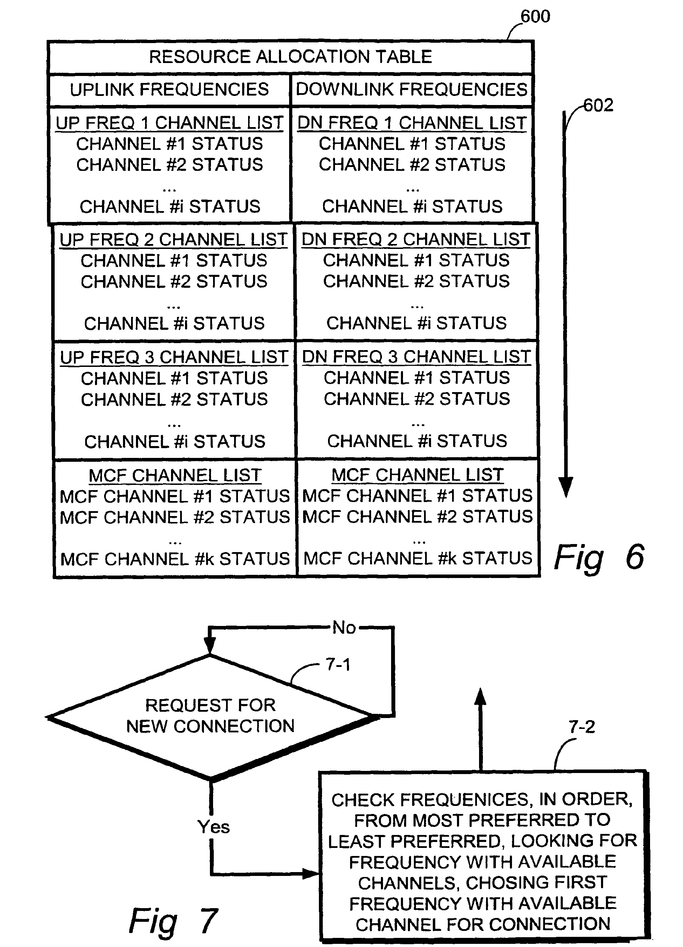

In accordance with another mode of the invention, known as the connection controlled mode, the maximum coverage frequency (MCF) is used only as a last resort for allocation to a new connection. In the connection controlled mode, the resource allocation table 100 is conceptualized as being an ordered list of frequencies. Fig. 6 shows another example of resource allocation table, particularly resource allocation table 600 which can be utilized with the resource allocation unit (RAU) 66 and other components shown in Fig. 3. For purposes of illustration, resource allocation table 600 is shown as having four uplink frequencies and four downlink frequencies. As reflected by arrow 602 in Fig. 6, the plural frequencies on the ordered list are ranked in preferred order of usage with the maximum coverage frequency being a least preferred frequency. In general, in the connection controlled mode, a new connection is allocated to a most preferred one of the plural frequencies having an available channel.

Fig. 7 shows basic steps performed by resource allocation unit (RAU) 66 of radio network controller (RNC) 24 for the connection controlled mode of the invention. In particular, step 7-1 shows resource allocation unit (RAU) 66 waiting for a request for a new connection. When a request for a new connection is received, at step 7-2 resource allocation unit (RAU) 66 checks through resource allocation table 600, checking frequencies, in order, from the most preferred (e.g., frequency 1) to the least preferred (i.e., the maximum coverage frequency), looking for the first frequency that can be used for the new connection, and choosing this first frequency for this connection. Thus, the maximum coverage frequency is the most conserved frequency, and therefore utilized to reach user equipment units which are situated proximate the maximum perimeter P_{MAX} of the cell (see Fig. 2C).

Additionally, by not allowing more than a predetermined number of connections on the most conserved frequency, a more controlled (e.g., constant radius) service area for the cell can be obtained.

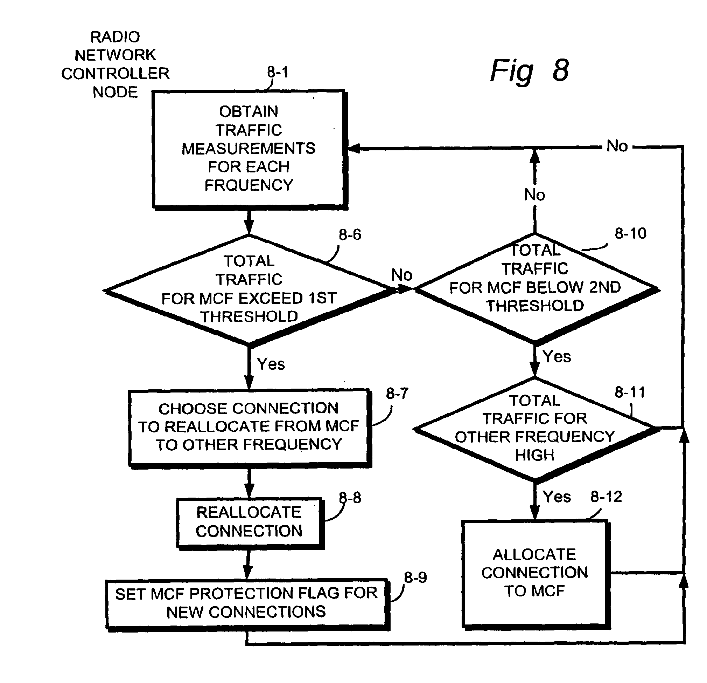

In accordance with yet a further mode of the invention, known as the traffic controlled mode, the amount of traffic occurring on each frequency is monitored by the radio network controller (RNC) 22 and used as an estimate of the load or interference on each frequency. In an example of the traffic controlled mode illustrated in Fig. 8, substantially all of the steps are performed by radio network controller (RNC) 24. As reflected by step 8-1, the radio network controller (RNC) 24 obtains traffic measurements for each frequency. The person skilled in the art will appreciate that there are several ways for the RNC to obtain traffic measurements for a frequency, such as (for example) adding the number of connections in a sector (with a weighting factor for the case in which there are different types of connections). As a next step (step 8-6), the radio network controller (RNC) 24 determines if the total traffic for the maximum coverage frequency (MCF) exceeds a first threshold, in similar manner to the interference determination of step 4-6 for the interference controlled mode. If the first threshold is exceeded at step 8-6, step 8 - 7 through step 8-9 are performed for the respective purposes of choosing a connection to reallocate from the maximum coverage frequency to another frequency, performing the actual reallocation (step 8-8), and setting the MCF protection flag (step 8-9), all before looping back to step 8-1. If the first traffic threshold is not exceeded at step 8-6, the radio network controller (RNC) 24 determines at step 8-10 whether the total traffic for the maximum coverage frequency is below a second threshold. If the determination at step 8-10 is positive, and if it is further determined at step 8-11 that the total traffic for the other frequency is high, a connection is allocated to the maximum coverage frequency at step 8-12.

Although not particularly stated herein, the person skilled in the art will realize that more than two uplink frequencies and more than two downlink frequencies can be employed at a given base station 22. In fact, as well known in the art, multiple frequencies can be employed for sectorized base stations. The present invention is applicable even to sectorized base stations, there being a maximum coverage frequency for each sector. The maximum coverage frequency can be the same or different for each sector.

It should be noted, in connection with the setting of the MCF protection flag at step 4-9, that for requests for certain important connections (e.g., such as a request for an emergency connection [e.g., 911]), the resource allocation unit (RAU) 66 can override the setting of the MCF protection flag and reallocate yet other connections in order to accommodate the emergency connection.

Thus, in accordance with the present invention, having an appropriate allocation of traffic between the available plural frequencies utilized by the base station reduces cell breathing tendencies of the cell. Moreover, as explained above, the appropriate allocation of traffic between the different plural frequencies utilized at a base station can be made both when a new radio resource is to be allocated in a cell (e.g., a new connection is requested), as well as a reallocation of existing traffic from the maximum coverage frequency to another frequency when cell conditions so require. As a consequence of the allocation (or reallocation), some frequency(ies) may carry more traffic so that other frequency(cies) [e.g., the maximum coverage frequency] can have reduced interference levels and thereby be used throughout the cell.

As exemplified above, the allocation of traffic in accordance with the present invention can be made according to differing strategies. One such strategy is to maximize the cell size, i.e., to minimize the interference level at the maximum coverage frequency. Another strategy can be to try to keep the cell size as constant as possible. These two strategies were merely examples, other strategies are within the purview of the present invention. These traffic allocation strategies can, of course, be combined with other mechanisms in order to reduce further the effect of cell breathing.

Various embodiments described herein and illustrated in the drawings are only examples. For example, the network of Fig. 1 may or may not include GPRS nodes. There is also the possibility that there may be no separate physical radio network controller (RNC) node, e.g., the functionality of the radio network controller (RNC) may instead be incorporated or otherwise included in another node such as the mobile switching center (MSC). Moreover, as noted above, the embodiment of base station node 22 and radio network controller (RNC) node 24 described herein, e.g., with reference to Fig. 3, are merely examples. Other node architectures and functionalities occur in differing embodiments.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A method of operating a cellular telecommunications system (18) wherein user equipment units in a cell served by a base station can interfere, the method **characterized by** allocating traffic between plural radio frequencies utilized at the base station (22) according to a cell size strategy for the cell to maintain or maximize cell size.

2. The method of claim 1, comprising allocating traffic between the plural frequencies utilized at the base station (22) to maintain a cell size as having a predetermined coverage (Pₘₐₓ).

3. The method of claim 1, comprising allocating traffic between the plural frequencies utilized at the base station to maximize cell size.

4. The method of claim 1, further comprising:
designating one of the plural frequencies as a maximum coverage frequency;
measuring total interference on the maximum coverage frequency; and,
when the total interference on the maximum coverage frequency exceeds an interference first threshold, releasing a connection carried by the maximum coverage frequency to another one of the plural frequencies.

5. The method of claim 1, further comprising:
designating one of the plural of frequencies as a maximum coverage frequency;
measuring total interference on the maximum coverage frequency; and,
when the total interference on the maximum coverage frequency exceeds an interference first threshold, requiring another one of the plural frequencies to carry a newly requested connection.

6. The method of claim 1, further comprising:
designating one of the plural frequencies as a maximum coverage frequency;
limiting a number of connections allocated to the maximum coverage frequency whereby the maximum coverage frequency is utilizable proximate an edge of the cell.

7. The method of claim 1, further comprising:
designating one of the plural frequencies as a maximum coverage frequency;
maintaining an ordered list of the plural frequencies, the plural frequencies on the ordered list being ranked in preferred order of usage with the maximum coverage frequency being a least preferred frequency ;
allocating to a new connection a most preferred one of the plural frequencies having an available channel.

8. The method of claim 1, further comprising:
designating one of the plural frequencies as a maximum coverage frequency;
limiting an amount of traffic allocated to the maximum coverage frequency whereby the maximum coverage frequency is utilizable proximate an edge of the cell.

9. The method of claim 1, further comprising:
designating one of the plural frequencies as a maximum coverage frequency;
determining total traffic on the maximum coverage frequency; and
when the total traffic on the maximum coverage frequency exceeds a first traffic threshold, requiring another one of the plural frequencies to carry a connection.

10. A cellular telecommunications system (18) wherein user equipment units in a cell served by a base station can interfere, the system (18) comprising:
a base station (22) adapted to utilize plural radio frequencies for serving a cell;
a resource allocation unit (66) adapted to allocate traffic between the plural radio frequencies according to a cell size strategy for the cell to maintain or maximize cell size.

11. The system of claim 10, wherein the resource allocation unit (66) is adapted to allocate traffic between the plural frequencies utilized at the base station to maintain a cell size as having a predetermined coverage (Pₘₐₓ).

12. The system of claim 10, wherein the resource allocation unit is adapted to allocate traffic between the plural frequencies utilized at the base station to maximize cell size.

13. The system of claim 10, wherein one of the plural radio frequencies is designated as a maximum coverage frequency, wherein the base station is adapted to measure total interference on the maximum coverage frequency; and further comprising
a node (24) which is adapted to release a connection carried by the maximum coverage frequency to another one of the plural frequencies when the total interference on the maximum coverage frequency exceeds a predetermined threshold.

14. The system of claim 13, wherein the node that is adapted to release the connection carried by the maximum coverage frequency is a radio network controller (24).

15. The system of claim 10, wherein one of the plural radio frequencies is designated as a maximum coverage frequency, wherein the base station is adapted to measure total interference on the maximum coverage frequency; and further comprising
a node (24) which is adapted to require another one of the plural frequencies to carry a newly requested connection when the total interference on the maximum coverage frequency exceeds a predetermined threshold.

16. The system of claim 15, wherein the node which is adapted to require another one of the plural frequencies to carry a newly requested connection is a radio network controller (24).

17. The system of claim 10, wherein one of the plural radio frequencies is designated as a maximum coverage frequency, wherein the resource allocation unit (66) is adapted to limit a number of connections allocated to the maximum coverage frequency whereby the maximum coverage frequency is utilizable proximate an edge of the cell.

18. The system of claim 17, wherein the resource allocation unit is adapted to maintain an ordered list (100) of the plural frequencies, the plural frequencies on the ordered list being ranked in preferred order of usage with the maximum coverage frequency being a least preferred frequency, and wherein the resource allocation unit is adapted to allocate to a new connection a most preferred one of the plural frequencies having an available channel.

19. The system of claim 10, whereon one of the plural radio frequencies is designated as a maximum coverage frequency, wherein the resource allocation unit is adapted to determine total traffic on the maximum coverage frequency, and wherein when the total traffic on the maximum coverage frequency exceeds a traffic threshold, the resource allocation unit is adapted to require another one of the plural frequencies to carry a connection.

## Patentansprüche

1. Verfahren zum Betreiben eines zellularen Telekommunikationssystems (18), wobei Benutzereinrichtungseinheiten in einer durch eine Basisstation versorgten Zelle einander stören können, wobei das Verfahren **gekennzeichnet ist durch** Zuweisen von Verkehr zwischen mehreren in der Basisstation (22) genutzten Funkfrequenzen gemäß einer Zellengrößenstrategie, damit die Zelle die Zellengröße bewahrt oder maximiert.

2. Verfahren nach Anspruch 1, umfassend: Zuweisen von Verkehr zwischen den mehreren in der Basisstation (22) genutzten Frequenzen, um eine Zellengröße als eine solche mit einer vorbestimmten Versorgung (Pₘₐₓ) zu bewahren.

3. Verfahren nach Anspruch 1, umfassend: Zuweisen von Verkehr zwischen den mehreren in der Basisstation genutzten Frequenzen, um die Zellengröße zu maximieren.

4. Verfahren nach Anspruch 1, ferner umfassend:
Festlegen einer der mehreren Frequenzen als eine Maximalversorgungsfrequenz;
Messen der Gesamtstörung auf der Maximalversorgungsfrequenz; und
wenn die Gesamtstörung auf der Maximalversorgungsfrequenz einen ersten Störungsschwellwert überschreitet, Auflösen einer Verbindung, die durch die Maximalversorgungsfrequenz getragen wird, zugunsten einer anderen der mehreren Frequenzen.

5. Verfahren nach Anspruch 1, ferner umfassend:
Festlegen einer der mehreren Frequenzen als eine Maximalversorgungsfrequenz;
Messen der Gesamtstörung auf der Maximalversorgungsfrequenz; und
wenn die Gesamtstörung auf der Maximalversorgungsfrequenz einen ersten Störungsschwellwert überschreitet, Fordern, daß eine andere der mehreren Frequenzen eine neu angeforderte Verbindung trägt.

6. Verfahren nach Anspruch 1, ferner umfassend:
Festlegen einer der mehreren Frequenzen als eine Maximalversorgungsfrequenz;
Begrenzen einer Anzahl von Verbindungen, die der Maximalversorgungsfrequenz zugewiesen werden, wodurch die Maximalversorgungsfrequenz nahe einem Rand der Zelle nutzbar ist.

7. Verfahren nach Anspruch 1, ferner umfassend:
Festlegen einer der mehreren Frequenzen als eine Maximalversorgungsfrequenz;
Führen einer geordneten Liste der mehreren Frequenzen, wobei die mehreren Frequenzen auf der geordneten Liste in der bevorzugten Reihenfolge der Verwendung angeordnet sind, wobei die Maximalversorgungsfrequenz eine am wenigsten bevorzugte Frequenz ist;
Zuweisen einer am meisten bevorzugten der mehreren Frequenzen, die einen verfügbaren Kanal aufweist, an eine neue Verbindung.

8. Verfahren nach Anspruch 1, ferner umfassend:
Festlegen einer der mehreren Frequenzen als eine Maximalversorgungsfrequenz;
Begrenzen eines Verkehrsvolumens, das der Maximalversorgungsfrequenz zugewiesen wird, wodurch die Maximalversorgungsfrequenz nahe einem Rand der Zelle nutzbar ist.

9. Verfahren nach Anspruch 1, ferner umfassend:
Festlegen einer der mehreren Frequenzen als eine Maximalversorgungsfrequenz;
Bestimmen des Gesamtverkehrs auf der Maximalversorgungsfrequenz; und
wenn der Gesamtverkehr auf der Maximalversorgungsfrequenz einen ersten Verkehrsschwellwert überschreitet, Fordern, daß eine andere der mehreren Frequenzen eine Verbindung trägt.

10. Zellulares Kommunikationssystem (18), wobei Benutzereinrichtungseinheiten in einer durch eine Basisstation versorgten Zelle einander stören können, wobei das System (18) umfaßt:
eine Basisstation (22), die dafür eingerichtet ist, mehrere Funkfrequenzen für die Versorgung einer Zelle zu nutzen;
eine Ressourcenzuweisungseinheit (66), die dafür eingerichtet ist, Verkehr zwischen den mehreren Funkfrequenzen gemäß einer Zellengrößenstrategie zuzuweisen, damit die Zelle die Zellengröße bewahrt oder maximiert.

11. System nach Anspruch 10, wobei die Ressourcenzuweisungseinheit (66) dafür eingerichtet ist, Verkehr zwischen den mehreren in der Basisstation genutzten Frequenzen zuzuweisen, um eine Zellengröße als eine solche mit einer vorbestimmten Versorgung (Pₘₐₓ) zu bewahren.

12. System nach Anspruch 10, wobei die Ressourcenzuweisungseinheit dafür eingerichtet ist, Verkehr zwischen den mehreren in der Basisstation genutzten Frequenzen zuzuweisen, um die Zellengröße zu maximieren.

13. System nach Anspruch 10, wobei eine der mehreren Funkfrequenzen als eine Maximalversorgungsfrequenz festgelegt ist, wobei die Basisstation dafür eingerichtet ist, die Gesamtstörung auf der Maximalversorgungsfrequenz zu messen; und ferner umfassend:
einen Knoten (24), der dafür eingerichtet ist, eine Verbindung, die durch die Maximalversorgungsfrequenz getragen wird, zugunsten einer anderen der mehreren Frequenzen aufzulösen, wenn die Gesamtstörung auf der Maximalversorgungsfrequenz einen vorbestimmten Schwellwert überschreitet.

14. System nach Anspruch 13, wobei der Knoten, der dafür eingerichtet ist, die durch die Maximalversorgungsfrequenz getragene Verbindung aufzulösen, ein Funknetzwerk-Controller (24) ist.

15. System nach Anspruch 10, wobei eine der mehreren Funkfrequenzen als eine Maximalversorgungsfrequenz festgelegt ist, wobei die Basisstation dafür eingerichtet ist, eine Gesamtstörung auf der Maximalversorgungsfrequenz zu messen; und ferner umfassend:
einen Knoten (24), der dafür eingerichtet ist, zu fordern, daß eine andere der mehreren Frequenzen eine neu angeforderte Verbindung trägt, wenn die Gesamtstörung auf der Maximalversorgungsfrequenz einen vorbestimmten Schwellwert überschreitet.

16. System nach Anspruch 15, wobei der Knoten, der dafür eingerichtet ist, zu fordern, daß eine andere der mehreren Frequenzen eine neu angeforderte Verbindung trägt, ein Funknetzwerk-Controller (24) ist.

17. System nach Anspruch 10, wobei eine der mehreren Frequenzen als eine Maximalversorgungsfrequenz festgelegt ist, wobei die Ressourcenzuweisungseinheit (66) dafür eingerichtet ist, eine Anzahl von Verbindungen zu begrenzen, die der Maximalversorgungsfrequenz zugewiesen werden, wodurch die Maximalversorgungsfrequenz nahe einem Rand der Zelle nutzbar ist.

18. System nach Anspruch 17, wobei die Ressourcenzuweisungseinheit dafür eingerichtet ist, eine geordnete Liste (100) der mehreren Frequenzen zu führen, wobei die mehreren Frequenzen auf der geordneten Liste in der bevorzugten Reihenfolge der Verwendung angeordnet sind, wobei die Maximalversorgungsfrequenz eine am wenigsten bevorzugte Frequenz ist und wobei die Ressourcenzuweisungseinheit dafür eingerichtet ist, einer neuen Verbindung eine am meisten bevorzugte der mehreren Frequenzen, die einen verfügbaren Kanal aufweist, zuzuweisen.

19. System nach Anspruch 10, wobei eine der mehreren Frequenzen als eine Maximalversorgungsfrequenz festgelegt ist, wobei die Ressourcenzuweisungseinheit dafür eingerichtet ist, den Gesamtverkehr auf der Maximalversorgungsfrequenz zu bestimmen, und wobei, wenn der Gesamtverkehr auf der Maximalversorgungsfrequenz einen Verkehrsschwellwert überschreitet, die Ressourcenzuweisungseinheit dafür eingerichtet ist, zu fordern, daß eine andere der mehreren Frequenzen eine Verbindung trägt.

## Revendications

1. Procédé d'exploitation d'un système de télécommunication cellulaire (18) dans lequel des équipements d'utilisateur dans une cellule desservie par une station de base peuvent interférer, le procédé étant **caractérisé par** l'allocation du trafic entre plusieurs fréquences radio utilisées au niveau de la station de base (22) selon une stratégie de taille de cellule pour que la cellule maintienne ou maximise la taille de cellule.

2. Procédé selon la revendication 1, comprenant d'allouer du trafic entre la pluralité de fréquences utilisées au niveau de la station de base (22) pour maintenir une taille de cellule ayant une couverture prédéterminée (Pₘₐₓ).

3. Procédé selon la revendication 1, comprenant d'allouer du trafic entre la pluralité de fréquences utilisées au niveau de la station de base pour maximiser la taille de cellule.

4. Procédé selon la revendication 1, comprenant en outre les étapes consistant à:
désigner une fréquence de la pluralité de fréquences comme fréquence de couverture maximum;
mesurer l'interférence totale sur la fréquence de couverture maximum; et,
lorsque l'interférence totale sur la fréquence de couverture maximum dépasse un premier seuil d'interférence, libérer une connexion acheminée par la fréquence de couverture maximum vers une autre fréquence de la pluralité de fréquences.

5. Procédé selon la revendication 1, comprenant en outre les étapes consistant à:
désigner une fréquence de la pluralité de fréquences comme fréquence de couverture maximum;
mesurer l'interférence totale sur la fréquence de couverture maximum; et,
lorsque l'interférence totale sur la fréquence de couverture maximum dépasse un premier seuil d'interférence, demander une autre fréquence de la pluralité de fréquences pour acheminer une connexion nouvellement demandée.

6. Procédé selon la revendication 1, comprenant en outre les étapes consistant à:
désigner une fréquence de la pluralité de fréquences comme fréquence de couverture maximum;
limiter un nombre de connexions allouées à la fréquence de couverture maximum, moyennant quoi la fréquence de couverture maximum est utilisable à proximité d'un bord de la cellule.

7. Procédé selon la revendication 1, comprenant en outre les étapes consistant à:
désigner une fréquence de la pluralité de fréquences comme fréquence de couverture maximum;
maintenir une liste ordonnée de la pluralité de fréquences, la pluralité de fréquences situées sur la liste ordonnée étant classées dans un ordre préféré d'utilisation, avec la fréquence de couverture maximum étant la fréquence la moins préférée;
allouer à une nouvelle connexion la fréquence la plus préférée de la pluralité de fréquences ayant un canal disponible.

8. Procédé selon la revendication 1, comprenant en outre les étapes consistant à:
désigner une fréquence de la pluralité de fréquences comme fréquence de couverture maximum;
limiter une quantité de trafic allouée à la fréquence de couverture maximum, moyennant quoi la fréquence de couverture maximum est utilisable à proximité d'un bord de la cellule.

9. Procédé selon la revendication 1, comprenant en outre les étapes consistant à:
désigner une fréquence de la pluralité de fréquences comme fréquence de couverture maximum;
déterminer un trafic total sur la fréquence de couverture maximum; et
lorsque le trafic total sur la fréquence de couverture maximum dépasse un premier seuil de trafic, demander une autre fréquence de la pluralité de fréquences pour acheminer une connexion.

10. Système de télécommunication cellulaire (18), dans lequel des équipements d'utilisateur dans une cellule desservie par une station de base peuvent interférer, le système (18) comprenant:
une station de base (22) adaptée pour utiliser plusieurs fréquences radio pour desservir une cellule;
une unité d'allocation des ressources (66) adaptée pour allouer du trafic entre la pluralité de fréquences radio selon une stratégie de taille de cellule pour que la cellule maintienne ou maximise la taille de cellule.

11. Système selon la revendication 10, dans lequel l'unité d'allocation des ressources (66) est adaptée pour allouer du trafic entre la pluralité de fréquences utilisées au niveau de la station de base pour maintenir une taille de cellule ayant une couverture prédéterminée (Pₘₐₓ).

12. Système selon la revendication 10, dans lequel l'unité d'allocation des ressources est adaptée pour allouer du trafic entre la pluralité de fréquences utilisées au niveau de la station de base pour maximiser la taille de cellule.

13. Système selon la revendication 10, dans lequel une fréquence de la pluralité de fréquences radio est désignée comme fréquence de couverture maximum, où la station de base est adaptée pour mesurer l'interférence totale sur la fréquence de couverture maximum; et comprenant en outre:
un noeud (24) qui est adapté pour libérer une connexion acheminée par la fréquence de couverture maximum vers une autre fréquence de la pluralité de fréquences lorsque l'interférence totale sur la fréquence de couverture maximum dépasse un seuil prédéterminé.

14. Système selon la revendication 13, dans lequel le noeud qui est adapté pour libérer la connexion acheminée par la fréquence de couverture maximum est un contrôleur de réseau radio (24).

15. Système selon la revendication 10, dans lequel une fréquence de la pluralité de fréquences radio est désignée comme fréquence de couverture maximum, où la station de base est adaptée pour mesurer l'interférence totale sur la fréquence de couverture maximum; et comprenant en outre:
un noeud (24) qui est adapté pour demander une autre fréquence de la pluralité de fréquences pour acheminer une connexion nouvellement demandée lorsque l'interférence totale sur la fréquence de couverture maximum dépasse un seuil prédéterminé.

16. Système selon la revendication 15, dans lequel le noeud qui est adapté pour demander une autre fréquence de la pluralité de fréquences pour acheminer une connexion nouvellement demandée est un contrôleur de réseau radio (24).

17. Système selon la revendication 10, dans lequel une fréquence de la pluralité de fréquences radio est désignée comme fréquence de couverture maximum, dans lequel l'unité d'allocation des ressources (66) est adaptée pour limiter un nombre de connexions allouées à la fréquence de couverture maximum, moyennant quoi la fréquence de couverture maximum est utilisable à proximité d'un bord de la cellule.

18. Système selon la revendication 17, dans lequel l'unité d'allocation des ressources est adaptée pour maintenir une liste ordonnée (100) de la pluralité de fréquences, la pluralité de fréquences situées sur la liste ordonnée étant classées dans un ordre préféré d'utilisation, avec la fréquence de couverture maximum étant la fréquence la moins préférée, et dans lequel l'unité d'allocation des ressources est adaptée pour allouer à une nouvelle connexion la fréquence la plus préférée de la pluralité de fréquences ayant un canal disponible.

19. Système selon la revendication 10, dans lequel une fréquence de la pluralité de fréquences radio est désignée comme fréquence de couverture maximum, dans lequel l'unité d'allocation des ressources est adaptée pour déterminer un trafic total sur la fréquence de couverture maximum, et dans lequel lorsque le trafic total sur la fréquence de couverture maximum dépasse un seuil de trafic, l'unité d'allocation des ressources est adaptée pour demander une autre fréquence de la pluralité de fréquences pour acheminer une connexion.
